# EUROPEAN PATENT SPECIFICATION

(11) **EP 4 242 496 B1**
(45) Date of publication and mention of the grant of the patent: **18.12.2024**
(21) Application number: 23156654.8
(22) Date of filing: 14.02.2023
(51) Int. Cl.: F16H 63/50, F16H 61/20, F16H 59/36, F16H 59/44, F16H 59/48, F16H 59/70

(54) **CONTROL DEVICE OF VEHICLE**
STEUERUNGSVORRICHTUNG FÜR EIN FAHRZEUG
DISPOSITIF DE COMMANDE DE VÉHICULE

(30) Priority: 08.03.2022 JP 2022035072
(43) Date of publication of application: 13.09.2023
(73) Proprietor: Suzuki Motor Corporation, Hamamatsu-shi, Shizuoka 432-8611 (JP)
(72) Inventor: SUZUKI, Kosuke, Hamamatsu-shi 432-8611 (JP)
(74) Representative: Plasseraud IP

(56) References cited:
- WO-A1-2014/193886
- JP-A- 2021 084 453

## Description

### [Technical Field]

The present invention relates to a control device of a vehicle.

### [Background Art]

JP 2021 084453 A, on which the two-part form is based, discloses that a vehicle speed is compared with a threshold speed of negative value during a vehicle travel on an uphill road using a motor, and the vehicle is determined to slide down to thereby start an engine following that the vehicle speed is the threshold speed or lower. According thereto, engine torque compensates for shortage of motor torque, preventing the vehicle from sliding down.

A further example of background art can be found in WO 2014/193886 A.

### [Summary of Invention]

### [Technical Problem]

However, in JP 2021 084453 A, the vehicle is determined to slide down if a vehicle speed in a direction opposite to a traveling direction depending on a shift position is detected and thus, when a garage shift operation of changing the shift position from one of forward and reverse ranges to the other is performed by a driver, the vehicle may be determined to slide down even without an actual sliding down.

For example, in a case where the driver switches the shift position from the reverse range to the forward range while the vehicle very-slowly travels backward, the vehicle still travels backward immediately after the switching to the forward range, thereby causing a problem that the vehicle is mistakenly determined to slide down.

Thus, an object of the present invention is to provide a control device of a vehicle capable of accurately determining the vehicle to slide down even when a garage shift operation is performed.

### [Solution to Problem]

According to the independent claim 1, there is provided a control device of a vehicle with at least one of a motor and an internal combustion engine as driving sources for a driving wheel, the control device including: a garage shift operation determination unit to determine whether a garage shift operation of changing a shift position from one of forward and reverse ranges to the other during a vehicle travel at a very low speed is performed by a driver. The invention of claim 1 is characterized by a sliding down determination unit configured to perform, if the garage shift operation determination unit determines that the garage shift operation is performed, a first sliding down determination process of determining whether the vehicle slides down, otherwise perform a second sliding down determination process of determining whether the vehicle slides down, the second sliding down determination process being different from the first sliding down determination process; and a control unit configured to drive the motor or the internal combustion engine to thereby increase driving force of the vehicle upon the determination that the vehicle slides down.

Preferred embodiments of the present invention are laid down in the dependent claims.

### [Advantageous Effect of Invention]

According to the present invention, it is possible to accurately determine a vehicle to slide down even when a garage shift operation is performed.

### [Brief Description of Drawings]

Fig. 1 is a diagram of a vehicle mounted with a control device according to an embodiment of the present invention.
Fig. 2 is a schematic block diagram showing the control device.
Fig. 3 is a flow chart showing a procedure of a vehicle sliding down determination operation to be performed in the control device.
Fig. 4 is a flow chart showing a procedure of a first sliding down determination process using a shift position, a motor rotation speed, and a motor rotation acceleration.
Fig. 5 is a flow chart showing a procedure of a second sliding down determination process using the shift position and the motor rotation speed.
Fig. 6 is a flow chart showing a procedure of the first sliding down determination process using the shift position, a vehicle speed, and a vehicle acceleration.
Fig. 7 is a flow chart showing a procedure of the second sliding down determination process using the shift position and the vehicle speed.

### [Description of Embodiment]

Hereinafter, referring to Figs., a control device of a vehicle according to an embodiment of the present invention will be described.

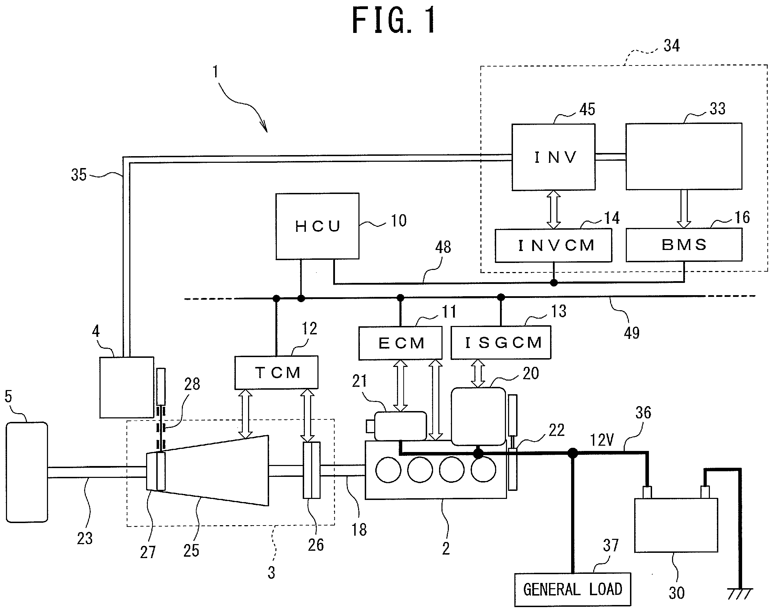

As shown in FIG. 1, a vehicle 1 includes an engine 2 (internal combustion engine), an automatic transmission 3, a motor generator 4 (motor), driving wheels 5, an HCU 10 (Hybrid Control Unit) to totally control the vehicle 1, an ECM 11 (Engine Control Module) to control the engine 2, an TCM 12 (Transmission Control Module) to control the transmission 3, an ISGCM 13 (Integrated Starter Generator Control Module), an INVCM 14 (Inverter Control Module), and an BMS 16 (Battery Management System).

The engine 2 is formed with cylinders, being configured to perform, for each cylinder, a series of four steps of an intake step, a compression step, an expansion step and an exhaust step.

The engine 2 is connected with an ISG 20 (Integrated Starter Generator) and a starter 21. Specifically, the ISG 20 is connected to a crankshaft 18 of the engine 2 via a belt 22 and the like. The ISG 20 has a motor function of rotating with supplied electric power to thereby rotate the engine 2 and a generator function of converting a rotation power inputted from the crankshaft 18 into electric power.

The ISG 20 is controlled by the ISGCM 13 to function as a motor, to restart the engine 2 in a stopped state due to an idle stop function. The ISG 20 may function as the motor to assist a vehicle travel.

The starter 21 includes a motor and a pinion gear (not shown). The starter 21 rotates the motor to thereby rotate the crankshaft 18, applying rotation power to the engine 2 at an engine start. Thus, the engine 2 is started by the starter 21, but restarted by the ISG 20 after being stopped depending on the idle stop function.

The transmission 3 is configured to change a rotation speed inputted from the engine 2 and output the changed rotation speed to the driving wheels 5 via driving shafts 23. The transmission 3 includes a normally-meshing type shift mechanism 25 composed of a parallel shaft gear mechanism, a clutch 26 as a power transmission mechanism composed of a normally-close type dry clutch, a differential 27, and actuators (not shown).

The transmission 3 is of so-called AMT (Automated Manual Transmission), in which the actuators to be controlled by the TCM 12 switch between shift stages in the shift mechanism 25 and engage/release the clutch 26. The differential 27 is configured to transmit power outputted from the shift mechanism 25 to the driving shafts 23.

The motor generator 4 is connected to the differential 27 via a chain 28. The motor generator 4 functions as a motor.

The motor generator 4 also functions as a generator, being configured to generate electric power using vehicle travel. Note that the motor generator 4 may be disposed on a power transmission path from the engine 2 to the driving wheels 5, being not limited to the connection to the differential 27.

Thus, the vehicle 1 includes the engine 2 and the motor generator 4 as driving sources to drive the driving wheels 5, which is a hybrid vehicle configured to be driven with at least one of engine torque of the engine 2 and motor torque of the motor generator 4.

As traveling modes, the vehicle 1 includes an HEV mode and an EV mode.

In the HEV mode, the vehicle 1 is allowed to travel with the engine and motor torques. During the HEV mode, the HCU 10 stops/restarts the engine 2 and controls the engine and motor torques.

In the EV mode, the vehicle 1 is allowed to travel with only the motor torque of the motor generator 4. In other words, in the EV mode, the vehicle 1 never uses the engine 2, which corresponds to so-called electric vehicle including only a motor as a driving source.

In addition to the above-mentioned traveling modes, there is also an engine mode to be performed when the motor generator 4 is disenabled to be used as a driving source for some reason. In the engine mode, the vehicle 1 is driven with only the engine torque. In other words, in the engine mode, the vehicle 1 never uses the motor generator 4, which corresponds to so-called conventional vehicle including only an engine as a driving source.

The vehicle 1 also includes a first battery 30, high-voltage power pack 34 with a second battery 33, a high-voltage cable 35, and a low-voltage cable 36.

The first and second batteries 30, 33 are of chargeable secondary batteries. For example, the first battery 30 is of a lead battery.

That is, the first battery 30 is of a low-voltage battery where the number of cells is determined to generate output voltage of about 12 V. State of the first battery 30, such as residual capacity, temperature, and charging/discharging current, is managed by the HCU 10.

On the other hand, the second battery 33 is of a high-voltage battery where the number of cells is determined to generate output voltage higher than that of the first battery 30, e.g., 100 V, such as a lithium ion battery. State of the second battery 33, such as charging amount, temperature, and charging/discharging current, is managed by the BMS 16.

The vehicle 1 also includes a general load(s) 37 as an electrical load(s) except for the starter 21 and the ISG 20.

The general load 37 does not require suitable electric power supply, which is to be temporarily used. The general load 37 includes a wiper (not shown), and an electric cooling fan (not shown) to feed cooling wind into the engine 2, for example.

The first battery 30 is connected to, via the low-voltage cable 36, the starter 21, the ISG 20, and the general load 37, to thereby supply them with electric power.

Thus, the first battery 30 is configured to supply electric power to at least the starter 21 and the ISG 20 as engine starters.

The high-voltage power pack 34 includes an inverter 45, the INVCM 14, and the BMS 16, in addition to the second battery 33. The high-voltage power pack 34 is connected to the motor generator 4 via the high-voltage cable 35, to thereby supply it with electric power.

The inverter 45 is controlled by the INVCM 14 so as to convert AC power from the high-voltage cable 35 and DC power from the second battery 33 into each other. For example, when powering the motor generator 4, the INVCM 14 causes the inverter 45 to convert the discharged DC power from the second battery 33 into AC power to thereby supply the motor generator 4 with the converted one.

Contrariwise, when performing regeneration by the motor generator 4, the INVCM 14 causes the inverter 45 to convert the generated AC power from the motor generator 4 into DC power to thereby charge the battery 33 with the converted one.

The HCU10, the ECM 11, the TCM 12, the ISGCM 13, the INVCM 14, and the BMS 16 are each constituted by a computer unit including a Central Processing Unit (CPU), a Random Access Memory (RAM), a Read Only Memory (ROM), a flash memory to store a backup data and the like, and input and output ports.

The ROM of each computer unit stores a program for causing the computer unit to function as the corresponding one of the HCU10, the ECM 11, the TCM 12, the ISGCM 13, the INVCM 14, and the BMS 16, in addition to various constants and maps.

That is, each CPU executes the program stored in the ROM using the RAM as an operation area, causing the computer unit thereof to function as the corresponding one of the HCU10, the ECM 11, the TCM 12, the ISGCM 13, the INVCM 14, and the BMS 16.

The ECM 11 is configured to perform an idle stop control. In the idle stop control, the ECM 11 stops the engine 2 upon establishment of a predetermined stop condition but drives the ISG 20 through the ISGCM 13 to thereby restart the engine 2 upon establishment of a predetermined restart condition. Due thereto, it is possible to avoid unnecessary idling in the engine 2, thereby improving fuel efficiency of the vehicle 1.

The vehicle 1 also includes CAN communication cables 48, 49 to form in-vehicle LAN (Local Area Network) in accordance with a standard such as CAN (Controller Area Network).

The HCU 10 is connected to the INVCM 14 and the BMS 16 through the CAN communication cable 48. The HCU 10, the INVCM 14, and the BMS 16 mutually send/receive a control signal and the like therethrough.

The HCU 10 is also connected to the ECM 11, the TCM 12, and the ISGCM 13 through the CAN communication cable 49. The HCU 10, the ECM 11, the TCM 12, and the ISGCM 13 mutually send/receive a control signal and the like therethrough.

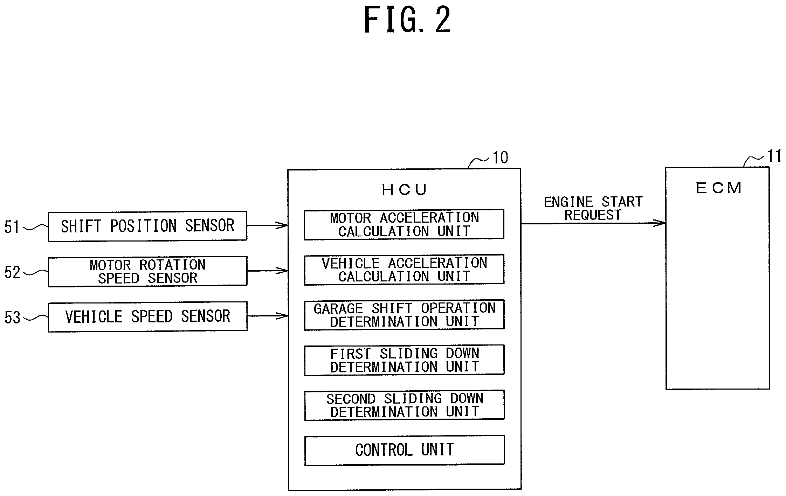

As shown in FIG. 2, the input port of the HCU 10 is connected with various sensors such as a shift position sensor 51, a motor rotation speed sensor 52, and a vehicle speed sensor 53.

The shift position sensor 51 is configured to detect a position of a shift lever (hereinafter also referred to as "shift position") and output the detection signal to the HCU 10.

There are included in the shift position a forward range (D range and the like), at which the vehicle 1 is allowed to forwardly travel, and a reverse range (R range), at which the vehicle 1 is allowed to backwardly travel. The forward range includes, in addition to D range at which the shift stages are automatically switched therebetween, M range at which the shift stages are switched therebetween in accordance with the driver's shift operation, and L range at which lower one(s) of the shift stages is allowed to be established.

The motor rotation speed sensor 52 is configured to detect a rotation speed of the motor generator 4 (hereinafter also referred to as "motor rotation speed") and output the detection signal to the HCU 10. As the motor rotation speed sensor 52, a resolver may be used.

The resolver to be used as the motor rotation speed sensor 52 is a sensor to accurately detect a rotation angle (rotation position), the motor rotation speed, and a rotation direction (hereinafter also referred to as "motor rotation direction") of the motor generator 4. Contrary to the accuracy detection, due to a backlash reduction, the resolver may output a rapidly-changed output signal, i.e., output signals to be outputted from the resolver may be drastically changed for a short period of time. For this reason, a part of the output signals, which drastically changes, is preferable not to be used for determining whether the vehicle 1 slides down.

The vehicle speed sensor 53 is configured to detect a speed of the vehicle 1 (hereinafter also referred to as "vehicle speed") and output the detection signal to the HCU 10. Specifically, the vehicle speed sensor 53 detects the vehicle speed and a traveling direction toward which the vehicle 1 travels, based on rotation speed and direction of the driving wheels 5. Note that the motor generator 4 is connected to the driving wheels 5 via the differential 27 and hence, the vehicle speed may be calculated using the motor rotation speed.

By the way, when the vehicle 1 is on an uphill road so as to forwardly travel thereagainst, if driving torque generated at the vehicle 1 is smaller than torque required to forwardly drive the vehicle 1 against the uphill road, the vehicle 1 may backwardly travel (slide down) on the uphill road contrary to the driver's intension.

When the vehicle 1 slides down on the uphill road as such, although the forward range is selected as the shift position, signs (positive or negative, depending on vehicle traveling direction (forward, backward)/motor rotation direction (clockwise, counterclockwise)) of values of the vehicle speed and the motor rotation speed correspond to those when the vehicle 1 backwardly travels. Note that such a vehicle sliding down may also occur when the vehicle 1 is on an uphill road so as to backwardly travel thereagainst.

For this reason, e.g., when driving the vehicle 1 on the uphill road, the HCU 10 determines that the vehicle 1 slides down upon detecting that the sign of the value of the vehicle speed/the motor rotation speed is opposite to that corresponding to a traveling direction depending on the shift position toward which the vehicle 1 is to travel.

Such a vehicle sliding down may occur not only when driving the vehicle 1 on the uphill road but also when parking the vehicle 1 at an inclined parking-position or garage. Generally, when parking the vehicle 1, the driver performs a garage shift operation of changing (shifting) the shift position from one of the forward and reverse ranges to the other.

Such a garage shift operation is normally performed after the vehicle 1 is completely stopped, but may be performed while the vehicle 1 travels at a very slow speed (e.g., lower than 10 km/h) before completely stopped. For this reason, the garage shift operation of changing the shift position from the reverse range/forward range to the forward range/reverse range may be performed while the vehicle 1 backwardly/forwardly travels at the very slow speed.

If the HCU 10 determines whether the vehicle 1 slides down based on only the vehicle speed or the motor rotation speed, it may determine, even without an actual sliding down, that the vehicle 1 slides down, when the driver performs the garage shift operation.

For example, when parking the vehicle 1, if the driver changes the shift position from the reverse range to the forward range while the vehicle 1 backwardly travels at the very low speed, immediately thereafter the vehicle 1 still backwardly travels. Due thereto, even if the vehicle 1 backwardly travels not depending on the slope of the road, an erroneous determination that the vehicle 1 slides down may occur.

Thus, in the present embodiment, when the driver performs the garage shift operation, the HCU 10 determines whether the vehicle slides down, using a different method than that without the garage shift operation.

Specifically, while the garage shift operation is not performed by the driver, the HCU 10 determines whether the vehicle 1 slides down, based on the vehicle speed or the motor rotation speed. On the other hand, when the garage shift operation is performed by the driver, the vehicle 1 determines whether the vehicle 1 slides down, based on an acceleration of the vehicle 1 (hereinafter also referred to as "vehicle acceleration") or an acceleration of the motor generator 4 (hereinafter also referred to as "motor rotation acceleration") in addition to the vehicle speed/the motor rotation speed. This is because, the vehicle speed and the motor rotation speed each increase along a direction toward which the vehicle 1 slides down (i.e., absolute value of the vehicle speed/motor rotation speed increases, to be added with the sign corresponding to the sliding down direction) when the vehicle 1 actually slides down, but gradually decrease (become close to zero) when the garage shift operation is performed while the vehicle 1 travels at the very low speed.

That is, the HCU 10 also uses, when the garage shift operation is performed, the vehicle acceleration or the motor rotation acceleration for the determination, accurately determining whether the vehicle 1 slides down. More specifically, the HCU 10 differentiates the vehicle speed/motor rotation speed to calculate the vehicle acceleration /motor rotation acceleration. Subsequently, the HCU 10 increases driving force of the vehicle 1, upon determining that the vehicle 1 slides down.

Next, a vehicle sliding down determination operation to be performed in the HCU 10 will be explained, in which the vehicle 1 is determined whether to slide down to thereby increase driving force thereof upon the determination that the vehicle 1 slides down. In the present embodiment, the vehicle speed and the motor rotation speed each have positive value (i.e., the values of the vehicle speed and the motor rotation speed are each added with the positive sign) when the vehicle 1 forwardly travels, but each have negative value when the vehicle 1 backwardly travels.

Firstly, a vehicle sliding down determination operation to be performed during vehicle travel in the HEV mode using motor torque or in the EV mode will be explained.

This operation may be performed in an electric vehicle.

The HCU 10 determines whether the driver performs the garage shift operation of changing the shift position from one of the forward and reverse ranges to the other, during vehicle travel using driving force generated from the motor generator 4.

Subsequently, the HCU 10 performs a first sliding down determination process to thereby determine whether the vehicle 1 slides down, upon the determination that the driver performs the garage shift operation. Otherwise (unless the HCU 10 determines that the driver performs the garage shift operation), the HCU 10 performs a second sliding down determination process different from the first one to thereby determine whether the vehicle 1 slides down.

Subsequently, the HCU 10 increases driving torque of the vehicle 1 upon the determination of the vehicle sliding down in accordance with the first or second sliding down determination process. Note that in order to increase driving torque of the vehicle 1, in the EV mode the motor torque is to be increased, but in the HEV mode the motor torque is to be increased or the engine torque is to be increased by driving the engine 2 (by restarting the engine 2 when the engine 2 is stopped).

That is, "the HCU 10 increases driving torque of the vehicle 1" means that driving force (e.g., motor torque, engine torque) available in the current traveling mode or vehicle configuration is increased so as to increase the total driving torque in the vehicle 1.

The first sliding down determination process is of determining whether the vehicle 1 slides down based on the shift position and the motor rotation speed and acceleration.

The second sliding down determination process is of determining whether the vehicle 1 slides down based on the shift position and the motor rotation speed.

In the first sliding down determination process, it is preferable that the absolute value of the motor rotation acceleration is determined whether to be smaller than a predetermined threshold and following this determination, the vehicle 1 is determined whether to slide down based on the shift position and the motor rotation speed and acceleration. In the present embodiment, in order to eliminate the influence from the backlash reduction of gears, as long as the absolute value of the motor rotation acceleration is smaller than the predetermined threshold, the HCU 10 determines whether the vehicle 1 slides down based on the shift position and the motor rotation speed and acceleration.

In the first sliding down determination process, the vehicle 1 may be determined whether to slide down based on the shift position and the vehicle speed and acceleration.

In the second sliding down determination process, the vehicle 1 may be determined whether to slide down based on the shift position and the vehicle speed.

During vehicle travel in the HEV mode using the motor torque (with the engine 2 stopped), the HCU 10 may restart the engine 2 to thereby increase driving force of the vehicle 1 upon determining that the vehicle 1 slides down in accordance with the first or second sliding down determination process.

Secondly, a case where such a vehicle sliding down determination operation is performed during vehicle travel in the HEV mode using engine torque or in the engine mode will be explained.

This operation may be performed in a conventional vehicle.

The HCU 10 determines, during vehicle travel using driving force generated from the engine 2, whether the driver performs the garage shift operation of changing the shift position from one of the forward and reverse ranges to the other.

Subsequently, the HCU 10 performs the first sliding down determination process to thereby determine whether the vehicle 1 slides down, upon the determination that the driver performs the garage shift operation. Otherwise (unless the HCU 10 determines that the driver performs the garage shift operation), the HCU 10 performs the second sliding down determination process different from the first one to thereby determine whether the vehicle 1 slides down.

Subsequently, the HCU 10 increases driving torque of the vehicle 1 upon the determination of the vehicle sliding down in accordance with the first or second sliding down determination process.

Note that in order to increase driving torque of the vehicle 1, engine torque/motor torque is to be increased in the HEV mode using the engine torque, but engine torque is to be increased in the engine mode. That is, "the HCU 10 increases driving torque of the vehicle 1" means that driving force available in the current traveling mode or vehicle configuration is increased so as to increase the total driving torque in the vehicle 1.

The first sliding down determination process is of determining whether the vehicle 1 slides down based on the shift position and the vehicle speed and acceleration.

The second sliding down determination process is of determining whether the vehicle 1 slides down based on the shift position and the vehicle speed.

Thus, the HCU 10 constitutes a garage shift operation determination unit, first and second sliding down determination units (both collectively referred to as "sliding down determination unit"), and a control unit of the present invention. Also, the HCU 10 constitutes a motor acceleration calculation unit to calculate the motor rotation acceleration and a vehicle acceleration calculation unit to calculate the vehicle acceleration.

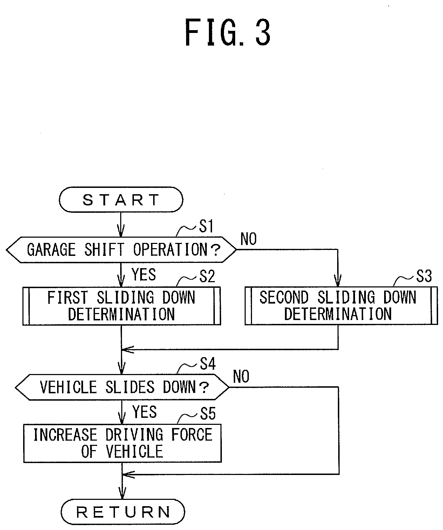

Next, referring to FIG. 3, a procedure of the vehicle sliding down determination operation to be performed in the control device according to the present embodiment will be explained. Note that this operation is started upon activating the HCU 10, being repeated at a predetermined interval.

At step S 1, the HCU 10 determines whether the garage shift operation is performed.

If "YES" at step S1 (i.e., when determining that the garage shift operation is performed), the HCU 10 proceeds to step S2 to perform the first sliding down determination process, otherwise (if "NO" at step S1) proceeding to step S3 to perform the second sliding down determination process.

Due thereto, the vehicle 1 is determined whether to slide down in accordance with the second sliding down determination process when the vehicle 1 is driven on the uphill road with the forward range selected, but is determined whether to slide down in accordance with the first sliding down determination process when the vehicle 1 is parked with the garage shift operation, for example.

The first sliding down determination process is performed, after the garage shift operation is detected (e.g., the shift position is changed from the forward/reverse range to the reverse/forward range), until a predetermined period of time (e.g., 2 sec) elapses or until a traveling direction corresponding to the changed range (the reverse/forward range) is detected.

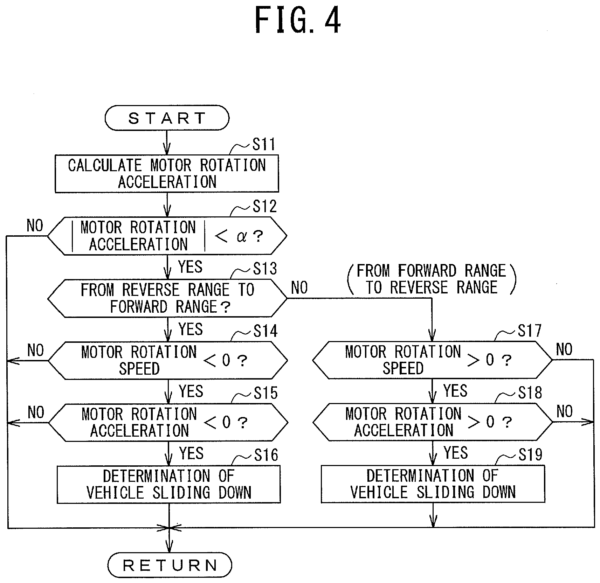

The HCU 10 determines, in the respective first and second sliding down determination processes (at steps S2, S3), whether the vehicle 1 slides down using different methods. Note that procedure of these processes will be explained in detail referring to FIGS. 4 and 5 or FIGS. 6 and 7.

After step S2 or S3, the HCU 10 determines, at step S4, whether the vehicle 1 slides down. At step S4, the HCU 10 determines whether the vehicle sliding down, by referring to the result of the first or second sliding down determination process (at step S2, S3). In other words, step S4 in FIG. 3 corresponds to step S16, S19 in FIG. 4, for example.

If "NO" at step S4 (when determining that the vehicle 1 does not slide down), the HCU 10 terminates this operation.

If "YES" at step S4 (when determining that the vehicle 1 slides down), the HCU 10 proceeds to step S5 to increase driving force of the vehicle 1.

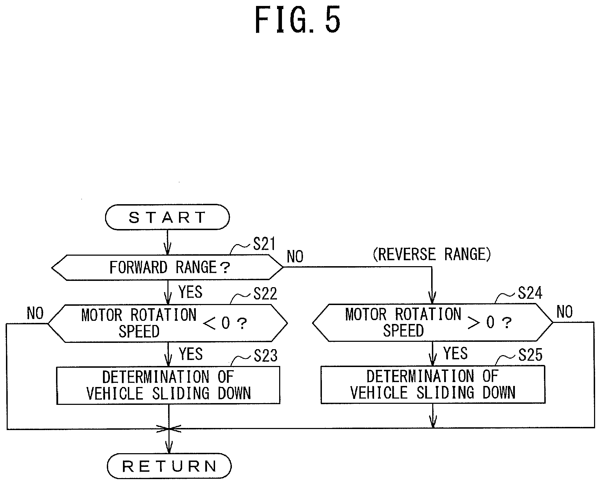

Next, referring to FIGS. 4 and 5, procedure of the respective first and second sliding down determination processes will be explained, which are performed during vehicle travel in the HEV mode using motor torque or in the EV mode.

Firstly, referring to FIG. 4, the first sliding down determination process of step S2 in FIG. 3 will be explained in detail, which is performed upon the garage shift operation.

At step S11, the HCU 10 calculates the motor rotation acceleration. Subsequently, at step S12, the HCU 10 determines whether the absolute value of the calculated motor rotation acceleration is smaller than a predetermined threshold α.

If "NO" at step S12 (when determining that the absolute value is not smaller than the threshold α), the HCU 10 terminates this process.

If "YES" at step S12 (when determining that the absolute value is smaller than the threshold α), the HCU 10 proceeds to step S13 to determine whether the shift position is changed from the reverse range to the forward range by the garage shift operation.

If "YES" at S13 (when the reverse range is changed into the forward range), the HCU 10 proceeds to step S14 to determine whether the motor rotation speed is smaller than zero. In other words, at step S14, the HCU 10 determines a traveling direction (forward or backward) of the vehicle 1 using the sign (positive or negative) of the value of the motor rotation speed. For example, if the motor rotation speed has negative value, the vehicle 1 is to backwardly travel.

If "NO" at step S14 (when determining that the motor rotation speed is not smaller than zero), the HCU 10 terminates this process. On the other hand, if "YES" at step S14 (when determining that the motor rotation speed is smaller than zero), the HCU 10 proceeds to step S15 to determine whether the motor rotation acceleration is smaller than zero. In other words, at step S15, the HCU 10 determines a speed increasing direction (forward or backward) of the vehicle 1 using the sign (positive or negative) of the value of the motor rotation acceleration. For example, if the motor rotation acceleration has negative value, the vehicle 1 is to backwardly increase speed thereof.

If "NO" at step S15 (when determining that the motor rotation acceleration is not smaller than zero), the HCU 10 terminates this process.

If "YES" at step S15 (when determining that the motor rotation acceleration is smaller than zero), the HCU 10 proceeds to step S16 to determine that the vehicle 1 slides down. After step S16, the HCU 10 terminates this process.

In contrast, if "NO" at step S13 (when determining that the shift position is not changed from the reverse range to the forward range (i.e., the forward range is changed into the reverse range by the garage shift operation), the HCU 10 proceeds to step S17 to determine whether the motor rotation speed is larger than zero. In other words, at step S17, similar to step S14, the HCU 10 determines a traveling direction (forward or backward) of the vehicle 1 using the sign (positive or negative) of the value of the motor rotation speed. For example, if the motor rotation speed has positive value, the vehicle 1 is to forwardly travel.

If "NO" at step S17 (when determining that the motor rotation speed is not larger than zero), the HCU 10 terminates this process.

If "YES" at step S17 (when determining that the motor rotation speed is larger than zero), the HCU 10 proceeds to step S18 to determine whether the motor rotation acceleration is larger than zero. In other words, at step S18, similar to step S15, the HCU 10 determines a speed increasing direction (forward or backward) of the vehicle 1 using the sign (positive or negative) of the value of the motor rotation acceleration. For example, if the motor rotation acceleration has positive value, the vehicle 1 is to forwardly increase speed thereof.

If "NO" at step S18 (when determining that the motor rotation acceleration is not larger than zero), the HCU 10 terminates this process. If "YES" at step S18 (when determining that the motor rotation acceleration is larger than zero), the HCU 10 proceeds to step S19 to determine that the vehicle 1 slides down. After step S19, the HCU 10 terminates this process.

Secondly, referring to FIG. 5, the second sliding down determination process of step S3 in FIG. 3 will be explained in detail, which is performed unless the garage shift operation is detected.

At step S21, the HCU 10 determines whether the shift position is in the forward range (i.e., the forward range is selected).

If "YES" at step S21 (when determining that the shift position is in the forward range), the HCU 10 proceeds to step S22 to determine whether the motor rotation speed is smaller than zero. In other words, at step S22, the HCU 10 determines a traveling direction (forward or backward) of the vehicle 1 using the sign (positive or negative) of the value of the motor rotation speed. For example, if the motor rotation speed has negative value, the vehicle 1 is to backwardly travel.

If "NO" at step S22 (when determining that the motor rotation speed is not smaller than zero), the HCU 10 terminates this process. If "YES" thereat (when determining that the motor rotation speed is smaller than zero), the HCU 10 proceeds to step S23 to determine that the vehicle 1 slides down. After step S23, the HCU 10 terminates this process.

If "NO" at step S21 (when determining that the shift position is in not the forward range but the reverse range), the HCU 10 proceeds to step S24 to determine whether the motor rotation speed is larger than zero. In other words, at step S24, the HCU 10 determines a traveling direction (forward or backward) of the vehicle 1 using the sign (positive or negative) of the value of the motor rotation speed. For example, if the motor rotation speed has positive value, the vehicle 1 is to forwardly travel.

If "NO" at step S24 (when determining that the motor rotation speed is not larger than zero), the HCU 10 terminates this process. If "YES" thereat (when determining that the motor rotation speed is larger than zero), the HCU 10 proceeds to step S25 to determines that the vehicle 1 slides down. After step S25, the HCU 10 terminates this process.

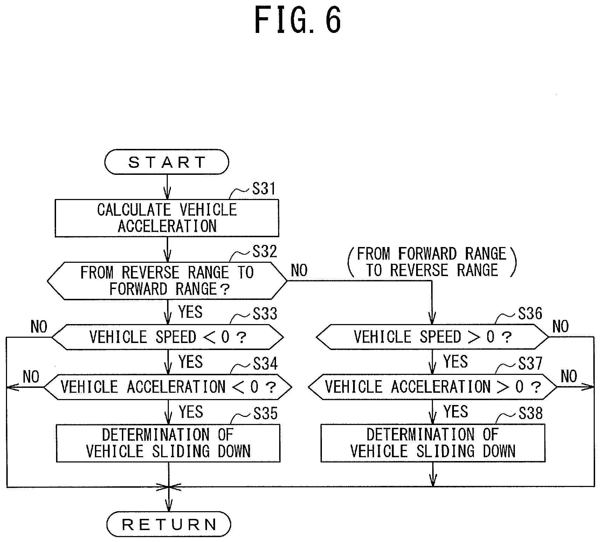

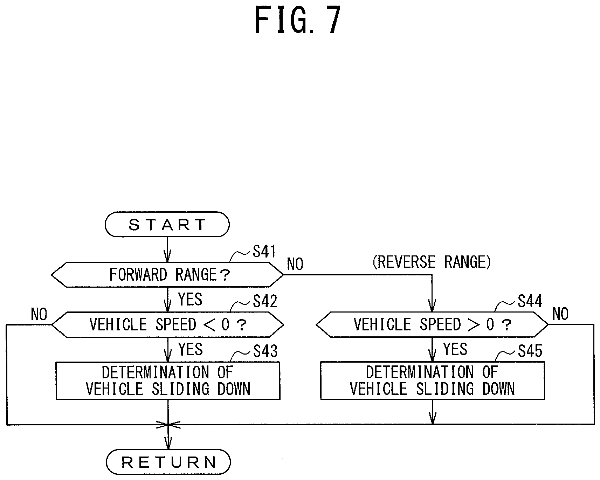

Next, referring to FIGS. 6 and 7, procedure of the respective first and second sliding down determination processes will be explained, which are performed during vehicle travel in the HEV mode using engine torque or in the engine mode.

Firstly, referring to FIG. 6, the first sliding down determination process of step S2 shown in FIG. 3 will be explained in detail, which is performed upon the garage shift operation. Note that the first sliding down determination process shown in FIG. 6 is to be performed during the traveling mode using the engine (e.g., the HEV mode or the engine mode), which is different from that shown in FIG. 4 in this point.

At step S31, the HCU 10 calculates the vehicle acceleration. At subsequent step S32, the HCU 10 determines whether the shift position is changed from the reverse range to the forward range by the garage shift operation.

If "YES" at S32 (when the reverse range is changed into the forward range), the HCU 10 proceeds to step S33 to determine whether the vehicle speed is smaller than zero. In other words, at step S33, the HCU 10 determines a traveling direction (forward or backward) of the vehicle 1 using the sign (positive or negative) of the value of the vehicle speed. For example, if the vehicle speed has negative value, the vehicle 1 is to backwardly travel.

If "NO" at step S33 (when determining that the vehicle speed is not smaller than zero), the HCU 10 terminates this process. On the other hand, if "YES" thereat (when determining that the vehicle speed is smaller than zero), the HCU 10 proceeds to step S34 to determine whether the vehicle acceleration is smaller than zero. In other words, at step S34, the HCU 10 determines a speed increasing direction (forward or backward) of the vehicle 1 using the sign (positive or negative) of the value of the vehicle acceleration. For example, if the vehicle acceleration has negative value, the vehicle 1 is to backwardly increase speed thereof.

If "NO" thereat (when determining that the vehicle acceleration is not smaller than zero), the HCU 10 terminates this process. If "YES" thereat (when determining that the vehicle acceleration is smaller than zero), the HCU 10 proceeds to step S35 to determine that the vehicle 1 slides down. After step S35, the HCU 10 terminates this process.

In contrast, if "NO" at step S32 (when determining that the shift position is not changed from the reverse range to the forward range (i.e., the forward range is changed into the reverse range by the garage shift operation), the HCU 10 proceeds to step S36 to determine whether the vehicle speed is larger than zero. In other words, at step S36, similar to step S33, the HCU 10 determines a traveling direction (forward or backward) of the vehicle 1 using the sign (positive or negative) of the value of the vehicle speed. For example, if the vehicle speed has positive value, the vehicle 1 is to forwardly travel.

If "NO" thereat (when determining that the vehicle speed is not larger than zero), the HCU 10 terminates this process.

If "YES" thereat (when determining that the vehicle speed is larger than zero), the HCU 10 proceeds to step S37 to determine whether the vehicle acceleration is larger than zero. In other words, at step S37, similar to step S34, the HCU 10 determines a speed increasing direction (forward or backward) of the vehicle 1 using the sign (positive or negative) of the value of the vehicle acceleration. For example, if the vehicle acceleration has positive value, the vehicle 1 is to forwardly increase speed thereof.

If "NO" thereat (when determining that the vehicle acceleration is not larger than zero), the HCU 10 terminates this process. If "YES" thereat (when determining that the vehicle acceleration is larger than zero), the HCU 10 proceeds to step S38 to determine that the vehicle 1 slides down. After step S38, the HCU 10 terminates this process.

Secondly, referring to FIG. 7, the second sliding down determination process of step S3 in FIG. 3 will be explained in detail, which is performed unless the garage shift operation is detected.

At step S41, the HCU 10 determines whether the shift position is in the forward range (i.e., the forward range is selected).

If "YES" at step S41 (when determining that the shift position is in the forward range), the HCU 10 proceeds to step S42 to determine whether the vehicle speed is smaller than zero. In other words, at step S42, the HCU 10 determines a traveling direction (forward or backward) of the vehicle 1 using the sign (positive or negative) of the value of the vehicle speed. For example, if the vehicle speed has negative value, the vehicle 1 is to backwardly travel.

If "NO" thereat (when determining that the vehicle speed is not smaller than zero), the HCU 10 terminates this process. If "YES" thereat (when determining that the vehicle speed is smaller than zero), the HCU 10 proceeds to step S43 to determine that the vehicle 1 slides down. After step S43, the HCU 10 terminates this process.

If "NO" at step S41 (when determining that the shift position is in not the forward range but the reverse range), the HCU 10 proceeds to step S44 to determine whether the vehicle speed is larger than zero. In other words, at step S44, the HCU 10 determines a traveling direction (forward or backward) of the vehicle 1 using the sign (positive or negative) of the value of the vehicle speed. For example, if the vehicle speed has positive value, the vehicle 1 is to forwardly travel.

If "NO" thereat (when determining that the vehicle speed is not larger than zero), the HCU 10 terminates this process. If "YES" thereat (when determining that the vehicle speed is larger than zero), the HCU 10 proceeds to step S45 to determine that the vehicle 1 slides down. After step S45, the HCU 10 terminates this process.

As mentioned above, in the present embodiment, the vehicle 1 includes the motor generator 4 and the engine 2 as driving sources to drive the driving wheels 5. The HCU 10 determines, during power on of the vehicle 1 (while being activated), whether the garage shift operation is performed by the driver.

If the HCU 10 determines that the garage shift operation is performed by the driver, it performs the first sliding down determination process to determine whether the vehicle 1 slides down. Otherwise (unless the HCU 10 determines that the garage shift operation is performed by the driver), the HCU 10 performs the second sliding down determination process to determine whether the vehicle 1 slides down, the second sliding down determination process being different from the first one.

Thus, the vehicle 1 is determined whether to slide down using different methods in response to present/absence of the garage shift operation, preventing the vehicle 1 from being mistakenly determined to slide down with the garage shift operation to thereby accurately determine the vehicle sliding down.

As the result of the first or second sliding down determination process, when determining that the vehicle 1 slides down, the HCU 10 increases driving force of the vehicle 1, thereby preventing the vehicle 1 from sliding down.

In the first sliding down determination process, the vehicle 1 is determined whether to slide down, based on the shift position and the motor rotation speed and acceleration.

Such a sliding down determination process is performed when the garage shift operation is performed, preventing the vehicle 1 from being mistakenly determined to slide down even if an actual traveling direction (forward or backward) is not reversed upon the garage shift operation (i.e., even if the selected shift position is changed, during vehicle travel at the very slow speed, into another corresponding to a direction opposite to the traveling direction in said vehicle travel). As a result, it is possible to accurately determine the vehicle sliding down.

Specifically, when e.g., the shift position is changed from the reverse range to the forward range by the garage shift operation during backward travel at the very slow speed, such a backward travel may be temporally continued upon the shift position change, but the traveling direction may be reversed from backward to forward after a period of time elapses from the shift position change. In such a case, if the vehicle 1 is determined, similar to that without the garage shift operation, whether to slide down based on the shift position and the motor rotation speed, immediately after the garage shift operation, the shift position is in the forward range but the motor rotation speed has negative value which corresponds to backward direction, causing the shift position and the traveling direction to mismatch each other to thereby mistakenly determine that the vehicle 1 slides down.

With respect to above, in the present embodiment, when the garage shift operation is performed, the vehicle 1 is determined whether to slide down based on the shift position and the motor rotation speed and acceleration. Due thereto, even when the shift position is in the forward range but the motor rotation speed has negative value which corresponds to backward direction, the vehicle 1 can be considered, if the motor rotation acceleration has positive value, as being decelerated to be in middle of transition from backward to forward, correctly determining that the vehicle 1 does not slide down. On the other hand, in this case, if the motor rotation acceleration has negative value, the vehicle speed in backward direction increases, correctly determining that the vehicle 1 slides down.

Similarly, when the shift position is changed from the forward range to the reverse range by the garage shift operation during backward travel at the very slow speed, such a forward travel may be temporally continued upon the shift position change, but the traveling direction may be reversed from forward to backward after a period of time elapses from the shift position change. In such a case, if the vehicle 1 is determined, similar to that without the garage shift operation, whether to slide down based on the shift position and the motor rotation speed, immediately after the garage shift operation, the shift position is in the reverse range but the motor rotation speed has positive value which corresponds to forward direction, causing the shift position and the traveling direction to mismatch each other to thereby mistakenly determine that the vehicle 1 slides down.

Hence, also in this case, the vehicle 1 is determined whether to slide down based on the shift position and the motor rotation speed and acceleration. Due thereto, even when the shift position is in the reverse range but the motor rotation speed has positive value which corresponds to forward direction, the vehicle 1 can be considered, if the motor rotation acceleration has negative value, as being decelerated to be in middle of transition from forward to backward, correctly determining that the vehicle 1 does not slide down. On the other hand, in this case, if the motor rotation acceleration has positive value, the vehicle speed in forward direction increases, correctly determining that the vehicle 1 slides down.

Thus, it is possible to prevent the vehicle 1 from being determined to slide down even without an actual vehicle sliding down, thereby avoiding driving force from being unnecessarily increased.

In contrast, in the second sliding down determination process, the vehicle 1 is determined whether to slide down based on the shift position and the motor rotation speed.

Due thereto, while the garage shift operation is not performed, the vehicle 1 is determined whether to slide down based on the shift position and the motor rotation speed, shortening a period of time for the vehicle sliding down determination, compared with a case where, as the garage shift operation is performed, the vehicle 1 is determined whether to slide down based on the shift position and the motor rotation speed and acceleration.

Furthermore, the motor rotation acceleration is obtained by differentiating the motor rotation speed, which is of differential value. Driving force generated from the motor generator 4 is transmitted to the driving wheels 5 via gears of power transmission mechanism and thus, rotation change or vehicle vibration due to backlash reduction of gears may cause the motor rotation acceleration to rapidly change. For this reason, even when the garage shift operation is not performed, if the vehicle 1 is determined whether to slide down based on, similar to the first sliding down determination, the shift position and the motor rotation speed and acceleration, it may be required to monitor the motor rotation acceleration for a certain period of time to eliminate influence from backlash reduction of gears, lengthening a period of time for the vehicle sliding down determination. With respect thereto, in the present embodiment, unless the garage shift operation is performed, the vehicle 1 is determined whether to slide down based on the shift position and the motor rotation speed without the motor rotation acceleration, shortening the period of time for the vehicle sliding down determination.

In the first sliding down determination process, the absolute value of the motor rotation acceleration is determined whether to be smaller than the predetermined threshold to determine whether the vehicle 1 slides down based on the shift position and the motor rotation speed and acceleration.

Thereby, it is possible to prevent the vehicle 1 from being determined to slide down even without an actual sliding down. Specifically, the motor rotation speed to be detected using the resolver is highly accurate. For this reason, the detection value of the motor rotation speed may rapidly change due to backlash reduction of gears. Such a rapid change due thereto is not associated with the above-mentioned vehicle sliding down. Hence, when the absolute value of the motor rotation acceleration is determined to be the predetermined threshold or larger, it is to be omitted from the vehicle sliding down determination (i.e., the sliding down determination is allowed to proceed after the absolute value falls below the predetermined threshold) to thereby prevent an erroneous determination of the sliding down.

In such a first sliding down determination process, the vehicle 1 may be determined whether to slide down based on the shift position and the vehicle speed and acceleration.

Also in this case, similar to the sliding down determination using the shift position and the motor rotation speed and acceleration, it is possible to accurately determine whether the vehicle 1 slides down even at the garage shift operation.

Similarly, in the second sliding down determination process, the vehicle 1 may be determined whether to slide down based on the shift position and the vehicle speed.

Thereby, also in this case, while the garage shift operation is not performed, it is possible to shorten the period of time for the sliding down determination, compared with that for the sliding down determination based on, as the garage shift operation is performed, the shift position and the vehicle speed and acceleration.

When the vehicle 1 is determined to slide down in accordance with the first or second sliding down determination process, it is preferable that the engine 2 is driven to thereby increase driving force of the vehicle 1.

Thereby, it is possible to increase driving force of the vehicle 1 with engine torque even unless the motor generator 4 is allowed to increase driving force of the vehicle 1.

Note that the motor generator 4 has a characteristic that heating amount becomes large in the vicinity of zero rpm of the motor rotation speed. Thus, the motor generator 4 may not be allowed, at e.g., vehicle start, to increase driving force of the vehicle 1 due to high-temperature of the motor generator. Additionally, the motor generator 4 may not be allowed to increase driving force of the vehicle 1 due to drop of SOC of the second battery 33 to supply the motor generator 4 with electric power. Even in such a case, the engine 2 is driven to thereby increase driving force of the vehicle 1 with engine torque.

The vehicle 1 may be conventional one with the engine 2 as the driving source to drive the driving wheels 5, without the motor generator 4. Also in such a vehicle, the HCU 10 determines whether the garage shift operation is performed by the driver. If the HCU 10 determines that the garage shift operation is performed by the driver, it performs the first sliding down determination process to determine whether the vehicle 1 slides down. Otherwise (unless the HCU 10 determines that the garage shift operation is performed by the driver), the HCU 10 performs the second sliding down determination process to determine whether the vehicle 1 slides down, the second sliding down determination process being different from the first one. The HCU 10 increases driving force of the vehicle 1 upon determining that the vehicle 1 slides down in accordance with the first or second sliding down determination process.

Thus, the vehicle 1 is determined whether to slide down using different methods in response to present/absence of the garage shift operation, preventing the vehicle 1 from being mistakenly determined to slide down with the garage shift operation to thereby accurately determine the vehicle sliding down.

Additionally, as the result of the first or second sliding down determination process, when determining that the vehicle 1 slides down, the HCU 10 increases driving force of the vehicle 1, thereby preventing the vehicle 1 from sliding down.

In such a conventional vehicle, the first sliding down determination process uses the shift position and the vehicle speed and acceleration.

Thus, the vehicle 1 is determined whether to slide down based on the shift position and the vehicle speed and acceleration, accurately determining the vehicle sliding down even with the garage shift operation.

Additionally, in such a conventional vehicle, the second sliding down determination process uses the shift position and the vehicle speed.

Thus, while the garage shift operation is not performed, the vehicle is determined whether to slide down based on the shift position and the vehicle speed, shortening the period of time for the vehicle sliding down determination, compared with a case where, as the garage shift operation is performed, the vehicle 1 is determined whether to slide down based on the shift position and the vehicle speed and acceleration.

Although the embodiment of the present invention has been disclosed, it is obvious that those skilled in the art can make changes without departing from the scope of the present invention. The scope of the present invention is defined by the appended claims. It is intended that all such modifications and equivalents are encompassed by the claims.

### [Reference Signs List]

1: vehicle
2: engine (internal combustion engine)
4: motor generator (motor)
5: driving wheel
10: HCU (garage shift operation determination unit, sliding down determination unit, control unit)

## Claims

1. A control device of a vehicle (1) with at least one of a motor (4) and an internal combustion engine (2) as driving sources for a driving wheel (5),
the control device comprising:
a garage shift operation determination unit (10) configured to determine whether a garage shift operation of changing a shift position from one of forward and reverse ranges to the other during a vehicle travel at a very slow speed is performed by a driver;
**characterized by**:
a sliding down determination unit (10) configured to perform, if the garage shift operation determination unit determines that the garage shift operation is performed, a first sliding down determination process of determining whether the vehicle slides down, otherwise perform a second sliding down determination process of determining whether the vehicle slides down, the second sliding down determination process being different from the first sliding down determination process; and
a control unit (10) configured to drive the motor (4) or the internal combustion engine (2) to thereby increase driving force of the vehicle, upon the determination that the vehicle slides down.

2. The control device as claimed in claim 1, wherein
the vehicle includes the motor, and
in the first sliding down determination process, the sliding down determination unit is configured to determine whether the vehicle slides down, based on: the shift position, and rotation speed and acceleration of the motor; or the shift position, and speed and acceleration of the vehicle.

3. The control device as claimed in claim 2, wherein
in the second sliding down determination process, the sliding down determination unit is configured to determine whether the vehicle slides down based on the shift position and the rotation speed of the motor.

4. The control device as claimed in claim 2, wherein
in the first sliding down determination process, the sliding down determination unit is configured to: determine whether an absolute value of the rotation acceleration of the motor is smaller than a predetermined threshold; and determine whether the vehicle slides down based on the shift position and the rotation speed and acceleration of the motor, following the determination of the absolute value.

5. The control device as claimed in claim 1, wherein
in the first sliding down determination process, the sliding down determination unit is configured to determine whether the vehicle slides down based on the shift position, and speed and acceleration of the vehicle.

6. The control device as claimed in claim 5, wherein
in the second sliding down determination process, the sliding down determination unit is configured to determine whether the vehicle slides down based on the shift position and the speed of the vehicle.

7. The control device as claimed in any one of claims 1 to 4, wherein
the vehicle includes both of the motor and the internal combustion engine,
the control unit is configured to drive the internal combustion engine to thereby increase driving force of the vehicle, upon the determination that the vehicle slides down.

## Patentansprüche

1. Steuervorrichtung eines Fahrzeugs (1) mit wenigstens einem aus einem Motor (4) und einem Verbrennungsmotor (2) als Antriebsquellen für ein Antriebsrad (5),
wobei die Steuervorrichtung umfasst:
eine Garagenschaltvorgang-Bestimmungseinheit (10), welche dazu eingerichtet ist, zu bestimmen, ob ein Garagenschaltvorgang eines Änderns einer Schaltposition von einem aus einem Vorwärts- und einem Rückwärtsbereich zu dem anderen während einer Fahrzeugfahrt bei sehr geringer Geschwindigkeit durch einen Fahrer durchgeführt wird;
**gekennzeichnet durch**:
eine Bergabroll-Bestimmungseinheit (10), welche dazu eingerichtet ist, wenn die Garagenschaltvorgang-Bestimmungseinheit bestimmt, dass der Garagenschaltvorgang durchgeführt wird, einen ersten Bergabroll-Bestimmungsprozess eines Bestimmens, ob das Fahrzeug bergab rollt, durchzuführen, andernfalls einen zweiten Bergabroll-Bestimmungsprozess eines Bestimmens, ob das Fahrzeug bergab rollt, durchzuführen, wobei sich der zweite Bergabroll-Bestimmungsprozess von dem ersten Bergabroll-Bestimmungsprozess unterscheidet; und
eine Steuereinheit (10), welche dazu eingerichtet ist, auf eine Bestimmung hin, dass das Fahrzeug bergab rollt, den Motor (4) oder den Verbrennungsmotor (2) anzutreiben, um dadurch eine Antriebskraft des Fahrzeugs zu erhöhen.

2. Steuervorrichtung nach Anspruch 1, wobei
wobei das Fahrzeug den Motor umfasst, und
in dem ersten Bergabroll-Bestimmungsprozess, die Bergabroll-Bestimmungseinheit dazu eingerichtet ist, zu bestimmen, ob das Fahrzeug bergab rollt, auf der Grundlage von: der Schaltposition und einer Rotationsgeschwindigkeit und einer Beschleunigung des Motors; oder der Schaltposition und einer Geschwindigkeit und einer Beschleunigung des Fahrzeugs.

3. Steuervorrichtung nach Anspruch 2, wobei
in dem zweiten Bergabroll-Bestimmungsprozess, die Bergabroll-Bestimmungseinheit dazu eingerichtet ist, auf Grundlage der Schaltposition und der Rotationsgeschwindigkeit des Motors zu bestimmen, ob das Fahrzeug bergab rollt.

4. Steuervorrichtung nach Anspruch 2, wobei
in dem ersten Bergabroll-Bestimmungsprozess, die Bergabroll-Bestimmungseinheit dazu eingerichtet ist: zu bestimmen, ob ein Absolutwert der Rotationsbeschleunigung des Motors geringer als ein vorbestimmter Schwellenwert ist; und auf Grundlage der Schaltposition und der Rotationsgeschwindigkeit und der Beschleunigung des Motors zu bestimmen, ob das Fahrzeug bergab rollt, der Bestimmung des Absolutwerts folgend.

5. Steuervorrichtung nach Anspruch 1, wobei
in dem ersten Bergabroll-Bestimmungsprozess, die Bergabroll-Bestimmungseinheit dazu eingerichtet ist, auf Grundlage der Schaltposition und der Geschwindigkeit und der Beschleunigung des Fahrzeugs zu bestimmen, ob das Fahrzeug bergab rollt.

6. Steuervorrichtung nach Anspruch 5, wobei
in dem zweiten Bergabroll-Bestimmungsprozess, die Bergabroll-Bestimmungseinheit dazu eingerichtet ist, auf Grundlage der Schaltposition und der Geschwindigkeit des Fahrzeugs zu bestimmen, ob das Fahrzeug bergab rollt.

7. Steuervorrichtung nach einem der Ansprüche 1 bis 4, wobei
das Fahrzeug sowohl den Motor als auch den Verbrennungsmotor umfasst,
die Steuereinheit dazu eingerichtet ist, auf die Bestimmung hin, dass das Fahrzeug bergab rollt, den Verbrennungsmotor anzutreiben, um dadurch eine Antriebskraft des Fahrzeugs zu erhöhen.

## Revendications

1. Dispositif de commande d'un véhicule (1) avec au moins un parmi un moteur (4) et un moteur à combustion interne (2) en tant que sources d'entraînement pour une roue motrice (5),
le dispositif de commande comprenant :
une unité de détermination d'opération de changement de vitesse à l'arrêt (10) configurée pour déterminer si une opération de changement de vitesse à l'arrêt, de changement d'une position de levier de vitesse parmi l'une des marches avant et arrière à l'autre, pendant un déplacement de véhicule à très faible vitesse est effectuée par un conducteur ;
**caractérisé par** :
une unité de détermination de recul (10) configurée pour effectuer, si l'unité de détermination d'opération de changement de vitesse à l'arrêt détermine que l'opération de changement de vitesse à l'arrêt est effectuée, un premier processus de détermination de recul pour déterminer si le véhicule recule, ou bien effectuer un second processus de détermination de recul pour déterminer si le véhicule recule, le second processus de détermination de recul étant différent du premier processus de détermination de recul ; et
une unité de commande (10) configurée pour entraîner le moteur (4) ou le moteur à combustion interne (2) pour ainsi augmenter la force d'entraînement du véhicule, lorsqu'il est déterminé que le véhicule recule.

2. Dispositif de commande selon la revendication 1, dans lequel
le véhicule inclut le moteur, et
au cours du premier processus de détermination de recul, l'unité de détermination de recul est configurée pour déterminer si le véhicule recule, sur la base de : la position de levier de vitesse, et une vitesse et une accélération de rotation du moteur ; ou la position de levier de vitesse, et une vitesse et une accélération du véhicule.

3. Dispositif de commande selon la revendication 2, dans lequel au cours du second processus de détermination de recul, l'unité de détermination de recul est configurée pour déterminer si le véhicule recule sur la base de la position de levier de vitesse et de la vitesse de rotation du moteur.

4. Dispositif de commande selon la revendication 2, dans lequel
au cours du premier processus de détermination de recul, l'unité de détermination de recul est configurée pour : déterminer si une valeur absolue de l'accélération de rotation du moteur est inférieure à un seuil prédéterminé ; et déterminer si le véhicule recule sur la base de la position de levier de vitesse et de la vitesse et de l'accélération de rotation du moteur, suite à la détermination de la valeur absolue.

5. Dispositif de commande selon la revendication 1, dans lequel
au cours du premier processus de détermination de recul, l'unité de détermination de recul est configurée pour déterminer si le véhicule recule sur la base de la position de levier de vitesse, et de la vitesse et de l'accélération du véhicule.

6. Dispositif de commande selon la revendication 5, dans lequel
au cours du second processus de détermination de recul, l'unité de détermination de recul est configurée pour déterminer si le véhicule recule sur la base de la position de levier de vitesse et de la vitesse du véhicule.

7. Dispositif de commande selon l'une quelconque des revendications 1 à 4, dans lequel
le véhicule inclut à la fois le moteur et le moteur à combustion interne,
l'unité de commande est configurée pour entraîner le moteur à combustion interne pour ainsi augmenter la force d'entraînement du véhicule, lorsqu'il est déterminé que le véhicule recule.
